(19) **Europäisches Patentamt / European Patent Office / Office européen des brevets**

(11) **EP 4 503 370 A1**

(12) **EUROPEAN PATENT APPLICATION**
published in accordance with Art. 153(4) EPC

(43) Date of publication:
**05.02.2025 Bulletin 2025/06**

(21) Application number: **22946171.0**

(22) Date of filing: **15.06.2022**

(51) International Patent Classification (IPC):
**H02J 7/00** *(2006.01)*   **H02J 3/32** *(2006.01)*

(52) Cooperative Patent Classification (CPC):
**H02J 3/32; H02J 7/00**

(86) International application number:
**PCT/CN2022/098807**

(87) International publication number:
**WO 2023/240474 (21.12.2023 Gazette 2023/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
 • **LIANG, Liliuyuan
  Ningde, Fujian 352100 (CN)**
 • **LU, Yanhua
  Ningde, Fujian 352100 (CN)**

 • **YU, Dongxu
  Ningde, Fujian 352100 (CN)**
 • **WU, Guoxiu
  Ningde, Fujian 352100 (CN)**
 • **LI, Meng
  Ningde, Fujian 352100 (CN)**
 • **XU, Xiangxiang
  Ningde, Fujian 352100 (CN)**
 • **LUO, Bingtuan
  Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **ENERGY STORAGE SYSTEM CONTROL METHOD AND APPARATUS, AND ENERGY STORAGE SYSTEM**

(57) Embodiments of the present application provide an energy storage system control method and apparatus, and an energy storage system. The energy storage system comprises a plurality of energy storage modules connected in series. The control method comprises: obtaining a difference value between first state parameters of a first energy storage module and a second energy storage module among N available energy storage modules in the energy storage system, N being a positive integer greater than 1; and performing equalization control on the energy storage system according to the difference value between the first state parameters. The control method and apparatus and the energy storage system according to the embodiments of the present application facilitate improving the efficiency of the energy storage system.

400

Acquiring a difference value between a first state parameter of a first energy storage module and a first state parameter of a second energy storage module among N available energy storage modules in the energy storage system, N being a positive integer greater than 1 — S410

Conducting balance control on the energy storage system according to the difference value of the first state parameters — S420

FIG. 3

EP 4 503 370 A1

## Description

## TECHNICAL FIELD

The present application relates to the field of energy storage, in particular to a control method and a control device of an energy storage system and the energy storage system.

## BACKGROUND

An energy storage system generally comprises a plurality of energy storage modules connected in series. In the manufacturing and using process, there must be inconsistency of parameters such as voltages, capacities and internal resistance regarding the energy storage modules in the energy storage system. As a result, there is always one or more energy storage modules which reach a charging or discharging end more quickly or more slowly than other energy storage modules, which leads to a phenomenon of inconsistency of charge-discharge properties. If no balance management is conducted on batteries, along with charging and discharging cycles, inconsistency between the energy storage modules may cause under-charging, over-charging and over-discharging, which has a strong impact on usage performance and service life of the energy storage system and may cause serious potential safety hazards.

## SUMMARY

Thus, the embodiments of the present application provide a control method and a control device of an energy storage system and the energy storage system, which are beneficial to improving efficiency of the energy storage system.

In a first aspect, a control method of an energy storage system is provided. The control method comprises: acquiring a difference value between a first state parameter of a first energy storage module and a first state parameter of a second energy storage module among N available energy storage modules in the energy storage system, N being a positive integer greater than 1; and conducting balance control on the energy storage system according to the difference value of the first state parameters.

In the embodiment, the difference value between the first state parameters of the energy storage modules is introduced in the process of conducting balance control on the energy storage system. On the one hand, charge-discharge properties between the energy storage modules in the energy storage system can be balanced, and the service life of the energy storage modules can be prolonged. On the other hand, different balance methods may be adopted based on the difference value of the first state parameters, which is beneficial to improving the efficiency of the energy storage system.

In one possible implementation, the conducting balance control on the energy storage system according to the difference value of the first state parameters comprises: dividing the N available energy storage modules into M energy storage module groups in the case that the difference value of the first state parameters is greater than a first threshold, M being a positive integer; and conducting balance control on the energy storage system according to a second state parameter of each energy storage module group among the M energy storage module groups.

In the embodiment, in the case that the difference value of the first state parameters is greater than the first threshold, it means that inconsistency between at least two energy storage modules among the N available energy storage modules is large. A current state of the energy storage modules may further increase the inconsistency. Thus, putting-in or splitting of the N available energy storage modules needs to be controlled again. At this time, the N available energy storage modules are divided into the M energy storage module groups. Based on the second state parameter of each energy storage module group among the M energy storage module groups, balance control is conducted on the energy storage modules. When the number of the energy storage modules in the energy storage system is too high, a computation amount of balance control can be reduced, and demands for a controller can be reduced.

In one possible implementation, the conducting balance control on the energy storage system according to the second state parameter of each energy storage module group among the M energy storage module groups comprises: determining a number $n_i$ of the energy storage modules to be put into the energy storage system in an ith energy storage module group according to the second state parameter of the ith energy storage module group among the M energy storage module groups, wherein i is a positive integer, and $1 \leq i \leq M$; and putting the $n_i$ energy storage modules in the ith energy storage module group into the energy storage system.

In the embodiment, the determining the number of the energy storage modules to be put into the energy storage system in the energy storage module group according to the second state parameter of the energy storage module group is beneficial to balancing charge-discharge properties between the energy storage module groups to prolong the service life of the energy storage system.

In one possible implementation, the determining the number ni of the energy storage modules to be put into the energy storage system in the ith energy storage module group according to the second state parameter of the ith energy storage module group among the M energy storage module groups comprises: determining the number ni of the energy storage modules to be put into the energy storage system in the ith energy storage module group according to a sum Ai of the second state parameters of all the energy storage modules in the ith energy storage module group, a sum A of the second state parameters of the N available energy storage modules and a total number n of the energy storage module to be put into the energy storage system, and n is a positive integer less than or equal to N.

In one possible implementation, the determining the number ni of the energy storage modules to be put into the energy storage system in the ith energy storage module group according to the sum Ai of the second state parameters of all the energy storage modules in the ith energy storage module group, the sum A of the second state parameters of the N available energy storage modules and the total number n of the energy storage modules to be put into the energy storage system comprises determining the number ni of the energy storage modules to be put into the energy storage system in the ith energy storage module group according to a formula below: $ni=n*Ai/A$.

In the embodiment, the number of the energy storage modules to be put into the energy storage system in the ith energy storage module group is determined according to a ratio of the sum of the second state parameters of all the energy storage modules in the ith energy storage module group to the sum of the second state parameters of the N available energy storage modules, which is more beneficial to balancing the charge-discharge properties between the energy storage module groups, thereby prolonging the service life of the energy storage system.

In one possible implementation, the putting the $n_i$ energy storage modules in the ith energy storage module group into the energy storage system comprises: putting $n_i$ energy storage modules with a minimum second state parameter in the ith energy storage module group into the energy storage system when the energy storage system is in a charging state, or putting $n_i$ energy storage modules with a maximum second state parameter in the ith energy storage module group into the energy storage system when the energy storage system is in a discharging state.

In one possible implementation, the control method also comprises acquiring a sequencing of the second state parameters of all the energy storage modules in the ith energy storage module group from small to large; the putting the $n_i$ energy storage modules with the minimum second state parameter in the ith energy storage module group into the energy storage system when the energy storage system is in a charging state or the putting the $n_i$ energy storage modules with the maximum second state parameter in the ith energy storage module group into the energy storage system when the energy storage system is in a discharging state comprises putting former $n_i$ energy storage modules in the ith energy storage module group into the energy storage system when the energy storage system is in a charging state, or putting latter $n_i$ energy storage modules in the ith energy storage module group into the energy storage system when the energy storage system is in a discharging state.

In the embodiment, based on the sequencing of the second state parameters of all the energy storage modules in the ith energy storage module group, a determined number of the energy storage modules are selected from the ith energy storage module group and put into the energy storage system, which is beneficial to balancing charge-discharge properties between the energy storage modules in the same energy storage module group and may balance charge-discharge properties between the energy storage module groups, thereby being capable of prolonging the service life of the energy storage system.

In one possible implementation, the conducting balance control on the energy storage system according to the difference value of the first state parameters comprises: determining a difference value $\Delta n$ of a number of the energy storage modules to be put into the energy storage system between a kth balance control cycle and a (k-1)th balance control cycle in the case that the difference value of the first state parameters acquired in the kth balance control cycle is less than or equal to the first threshold according to a formula below: $\Delta n=n(k)-n(k-1)$, wherein n(k) is a number of the energy storage modules to be put into the energy storage system in the kth balance control cycle of the energy storage system, n(k-1) is a number of the energy storage modules to be put into the energy storage system in the (k-1)th balance control cycle, and k is a positive integer greater than 1; and conducting balance control on the energy storage system according to the difference value $\Delta n$ of the number of the energy storage modules to be put into the energy storage system in the kth balance control cycle.

In the embodiment, in the case that the difference value of the first state parameters acquired in the current balance control cycle is less than or equal to the first threshold, balance control may be conducted on the energy storage system in the current balance control cycle based on a difference between numbers of the energy storage modules to be put into the energy storage system in the current balance control cycle and a former balance control cycle, it helps to avoid repeated putting-in or splitting of the energy storage modules, thereby being capable of reducing on-off frequencies of switch devices in the energy storage modules and reducing wastage of the switch devices.

In one possible implementation, the conducting balance control on the energy storage system in the kth balance control cycle according to the difference value $\Delta n$ of the number of the energy storage modules to be put into the energy storage system comprises:

in the kth balance control cycle in the case of $\Delta n=0$, controlling a state of the N available energy storage modules to be in accord with a state of the N available energy storage modules in the (k-1)th balance control cycle.

In the embodiment, when the difference between the numbers of the energy storage modules to be put into the energy storage system between two former and latter balance control cycles is 0, the states of the N available energy storage modules of the energy storage system in the latter balance control cycle and the former balance control cycle keep consistent with each other as much as possible, thereby being capable of minimizing the on-off frequencies of the switch devices in the energy storage modules and reducing wastage of the switch devices.

In one possible implementation, the conducting kth balance control on the energy storage system in the kth balance control cycle according to the difference value $\Delta n$ of the number of the energy storage modules to be put into the energy storage system comprises: putting $\Delta n$ energy storage modules among P available energy storage modules split in the (k-1)th balance control cycle into the energy storage system in the kth balance control cycle in the case of $\Delta n>0$, and P is a positive integer.

In the embodiment, when the number of the energy storage modules to be put into the energy storage system acquired in advance in the latter balance control cycle is greater than that of the energy storage modules to be put into the energy storage system acquired in advance in the former balance control cycle, the states of the energy storage modules put into the energy storage system in the former balance control cycle may be controlled to remain unchanged. Just put a certain number of the energy storage modules not put into the energy storage system in the former balance control cycle into the energy storage system, and make sure that the number of the energy storage modules put into the energy storage system in the latter balance control cycle is equal to the number of the energy storage modules to be put into the energy storage system acquired in advance, thereby being capable of reducing the on-off frequencies of the switch devices of the energy storage modules in the balance control process as much as possible, and reducing wastage of the switch devices.

In one possible implementation, the putting the $\Delta n$ energy storage modules among the P available energy storage modules split in the (k-1)th balance control cycle into the energy storage system in the kth balance control cycle in the case of $\Delta n>0$ comprises: putting $\Delta n$ energy storage modules with a minimum third state parameter among the P available energy storage modules into the energy storage system in the kth balance control cycle in the case that $\Delta n>0$ and the energy storage system is in a charging state, or putting $\Delta n$ energy storage modules with a maximum third state parameter among the P available energy storage modules into the energy storage system in the kth balance control cycle when the energy storage system is in a discharging state.

In one possible implementation, the control method also comprises acquiring a sequencing of the third state parameters of the P available energy storage modules from small to large; the putting the $\Delta n$ energy storage modules with the minimum third state parameter among the P available energy storage modules into the energy storage system in the kth balance control cycle in the case that $\Delta n>0$ and the energy storage system is in a charging state or the putting the $\Delta n$ energy storage modules with the maximum third state parameter among the P available energy storage modules into the energy storage system in the kth balance control cycle when the energy storage system is in a discharging state comprises putting former $\Delta n$ energy storage modules among the P available energy storage modules into the energy storage system in the kth balance control cycle in the case that $\Delta n>0$ and the energy storage system is in a charging state, or putting latter $\Delta n$ energy storage modules among the P available energy storage modules into the energy storage system in the kth balance control cycle in the case that $\Delta n>0$ and the energy storage system is in a discharging state.

In the embodiment, based on the sequencing of the third state parameters of the split P available energy storage modules, a determined number of the energy storage modules are selected from the P available energy storage modules and put into the energy storage system, which is beneficial to balancing charge-discharge properties between the energy storage modules in the energy storage system, thereby being capable of prolonging the service life of the energy storage system.

In one possible implementation, the conducting kth balance control on the energy storage system in the kth balance control cycle according to the difference value $\Delta n$ of the number of the energy storage modules to be put into the energy storage system comprises: splitting $\Delta n$ energy storage modules put into Q available energy storage modules in the (k-1)th balance control cycle from the energy storage system in the kth balance control cycle in the case of $\Delta n<0$, Q being a positive integer.

In the embodiment, when the number of the energy storage modules to be put into the energy storage system acquired in advance in the latter balance control cycle is less than that of the energy storage modules to be put into the energy storage system acquired in advance in the former balance control cycle, the states of the energy storage modules split from the energy storage system in the former balance control cycle may be controlled to remain unchanged. Just split a certain number of the energy storage modules put into the energy storage system in the former balance control cycle from the energy storage system, and make sure that the number of the energy storage modules put into the energy storage system in the latter balance control cycle is equal to the number of the energy storage modules to be put into the energy storage system acquired in advance, thereby being capable of reducing the on-off frequencies of the switch devices of the energy storage modules in the balance control process as much as possible, and reducing wastage of the switch devices.

In one possible implementation, the splitting the $\Delta n$ energy storage modules among the Q available energy storage modules put into the energy storage system in the (k-1)th balance control cycle from the energy storage system in the kth balance control cycle in the case of $\Delta n<0$ comprises: splitting $\Delta n$ energy storage modules with a maximum third state parameter among the Q available energy storage modules from the energy storage system in the kth balance control cycle in the case that $\Delta n<0$ and the energy storage system is in a charging state, or splitting $\Delta n$ energy storage modules with a minimum third state parameter among the Q available energy storage modules from the energy storage system in the kth balance control cycle when the energy storage system is in a discharging state.

In one possible implementation, the control method also comprises acquiring a sequencing of the third state parameters of the Q available energy storage modules from small to large; the splitting the $\Delta n$ energy storage modules with the maximum third state parameter among the Q available energy storage modules from the energy storage system in the kth balance control cycle in the case that $\Delta n<0$ and the energy storage system is in a charging state or the splitting the $\Delta n$ energy storage modules with the minimum third state parameter among the Q available energy storage modules from the energy storage system in the kth balance control cycle when the energy storage system is in a discharging state comprises: splitting latter $\Delta n$ energy storage modules among the Q available energy storage modules from the energy storage system in the kth balance control cycle in the case that $\Delta n<0$ and the energy storage system is in a charging state, or splitting former $\Delta n$ energy storage modules among the Q available energy storage modules from the energy storage system in the kth balance control cycle in the case that $\Delta n<0$ and the energy storage system is in a discharging state.

In the embodiment, based on the sequencing of the third state parameters of the Q available energy storage modules put into the energy storage system, a determined number of the energy storage modules are selected from the Q available energy storage modules and put into the energy storage system, which is beneficial to balancing charge-discharge properties between the energy storage modules in the energy storage system, thereby being capable of prolonging the service life of the energy storage system.

In one possible implementation, the first energy storage module is an energy storage module with a maximum first state parameter among the N available energy storage modules, and the second energy storage module is an energy storage module with a minimum first state parameter among the N available energy storage modules.

In the embodiment, balance control is conducted on the energy storage system by acquiring a maximum difference value between the first state parameters of the N available energy storage modules. The difference value between the first state parameters of any two of the other energy storage modules may be less than the first threshold directly by default in the case that the maximum difference value is less than the first threshold, which can avoid the situation that which balance control method can be adopted is determined by acquiring the difference value of a plurality of first state parameters, thereby being capable of reducing the computation amount of balance control, increasing the speed of balance control and reducing demands for the controller. In addition, it is necessary to regain control of putting-in and splitting of N available energy storage modules in the case that the maximum difference value is greater than the first threshold, thereby being capable of avoiding unnecessary on-off actions as much as possible, reducing the on-off frequencies of the switch devices and lowering wastage of the switch devices.

In one possible implementation, the state parameter is related to at least one kind of information among the following information: a state of charge SOC, a state of power SOP and a state of health SOH.

In one possible implementation, the state of power SOP is related to temperature and the SOC.

In the embodiment, if the state parameter adopts a function of SOP, effects of the temperature and charging and discharging power on balance control can be fully considered so that the whole balance control process of the energy storage system is no longer limited by the charging and discharging power of a single energy storage module; if the state parameter adopts a function of SOH, the problems of different aging degrees and large parameter variations of energy storage modules after long-time running can be solved, thereby being beneficial to improving the reliability of the energy storage system.

Optionally, in the embodiment of the present application, the first energy storage module is an energy storage module with a maximum first state parameter among the N available energy storage modules, and the second energy storage module is an energy storage module with a minimum first state parameter among the N available energy storage modules.

In a second aspect, a control device of an energy storage system is provided. The control device comprises: an acquisition unit configured to acquire a difference value between a first state parameter of a first energy storage module and a first state parameter of a second energy storage module among N available energy storage modules in the energy storage system, N being a positive integer; and a control unit configured to conduct balance control on the energy storage system according to the difference value of the first state parameters.

In one possible implementation, the control unit is specifically configured to: divide the N available energy storage modules into M energy storage module groups in the case that the difference value of the first state parameters is greater than the first threshold, M being a positive integer; and conduct balance control on the energy storage system according to the second state parameter of each energy storage module group among the M energy storage module groups.

In one possible implementation, the control unit comprises: a determination subunit configured to determine a number $n_i$ of the energy storage modules to be put into the energy storage system in an ith energy storage module group according to the second state parameter of the ith energy storage module group among the M energy storage module groups, wherein i is a positive integer, and $1 \leq i \leq M$; and a control subunit configured to put the $n_i$ energy storage modules in the ith energy storage module group into the energy storage system.

In one possible implementation, the determination subunit is specifically configured to determine the number $n_i$ of the energy storage modules to be put into the energy storage system in the ith energy storage module group according to a sum $A_i$ of the second state parameters of all the energy storage modules in the ith energy storage module group, a sum A of the second state parameters of the N available energy storage modules and a total number n of the energy storage modules to be put into the energy storage system, and n is a positive integer less than or equal to N.

In one possible implementation, the determination subunit is specifically configured to determine the number $n_i$ of the energy storage modules to be put into the energy storage system in the ith energy storage module group according to a formula below: $n_i = n*A_i/A$.

In one possible implementation, the control subunit is specifically configured to put $n_i$ energy storage modules with a minimum second state parameter in the ith energy storage module group into the energy storage system when the energy storage system is in a charging state, or put $n_i$ energy storage modules with a maximum second state parameter in the ith energy storage module group when the energy storage system is in a discharging state.

In one possible implementation, the acquisition unit is also configured to acquire a sequencing of the second state parameters of all the energy storage modules in the ith energy storage module group from small to large; the control subunit is specifically configured to put former $n_i$ energy storage modules in the ith energy storage module group into the energy storage system when the energy storage system is in a charging state, or put latter $n_i$ energy storage modules in the ith energy storage module group into the energy storage system when the energy storage system is in a discharging state.

In one possible implementation, the control unit comprises: a determination subunit configured to determine a difference value $\Delta n$ of numbers of the energy storage modules to be put into the energy storage system between the kth balance control cycle and the (k-1)th balance control cycle in the case that the difference value of the first state parameters acquired in the kth balance control cycle is less than or equal to the first threshold according to a formula below: $\Delta n = n(k) - n(k-1)$, wherein n(k) is a number of the energy storage modules to be put into the energy storage system in the kth balance control cycle of the energy storage system, n(k-1) is a number of the energy storage modules to be put into the energy storage system in the (k-1)th balance control cycle, and k is a positive integer greater than 1; and a control subunit configured to conduct balance control on the energy storage system according to the difference value $\Delta n$ of number of the energy storage modules to be put into the energy storage system in the kth balance control cycle.

In one possible implementation, the control subunit is specifically configured to control a state of the N available energy storage modules to be in accord with a state of the N available energy storage modules in the (k-1)th balance control cycle in the kth balance control cycle in the case of $\Delta n = 0$,

In one possible implementation, the control subunit is specifically configured to put the $\Delta n$ energy storage modules among P available energy storage modules split in the (k-1)th balance control cycle into the energy storage system in the kth balance control cycle in the case of $\Delta n > 0$, and P is a positive integer.

In one possible implementation, the control subunit is specifically configured to put the $\Delta n$ energy storage modules with a minimum third state parameter among the P available energy storage modules into the energy storage system in the kth balance control cycle in the case that $\Delta n > 0$ and the energy storage system is in a charging state, or put the $\Delta n$ energy storage modules with a maximum third state parameter among the P available energy storage modules into the energy storage system in the kth balance control cycle when the energy storage system is in a discharging state.

In one possible implementation, the acquisition unit 910 is also configured to acquire a sequencing of the third state parameters of the P available energy storage modules from small to large; the control subunit is specifically configured to put the former $\Delta n$ energy storage modules among the P available energy storage modules into the energy storage system in the kth balance control cycle in the case that $\Delta n > 0$ and the energy storage system is in a charging state, or put the latter $\Delta n$ energy storage modules among the P available energy storage modules into the energy storage system in the kth balance control cycle in the case that $\Delta n > 0$ and the energy storage system is in a discharging state.

In one possible implementation, the control subunit is specifically configured to split the $\Delta n$ energy storage modules among the Q available energy storage modules put into the energy storage system in the (k-1)th balance control cycle from the energy storage system in the kth balance control cycle in the case of $\Delta n < 0$, and Q is a positive integer.

In one possible implementation, the control subunit is specifically configured to split $\Delta n$ energy storage modules with a maximum third state parameter among the Q available energy storage modules from the energy storage system in the kth balance control cycle in the case that $\Delta n < 0$ and the energy storage system is in a charging state, or split $\Delta n$ energy storage modules with a minimum third state parameter among the Q available energy storage modules from the energy storage system in the kth balance control cycle when the energy storage system is in a discharging state.

In one possible implementation, the acquisition unit 910 is also configured to acquire a sequencing of the third state parameters of the Q available energy storage modules from small to large; the control subunit is specifically configured to split the latter $\Delta n$ energy storage modules among the Q available energy storage modules from the energy storage system in the kth balance control cycle in the case that $\Delta n<0$ and the energy storage system is in a charging state, or split the former $\Delta n$ energy storage modules among the Q available energy storage modules from the energy storage system in the kth balance control cycle in the case that $\Delta n<0$ and the energy storage system is in a discharging state.

In one possible implementation, the first energy storage module is an energy storage module with a maximum first state parameter among the N available energy storage modules, and the second energy storage module is an energy storage module with a minimum first state parameter among the N available energy storage modules.

In one possible implementation, the state parameter is related to at least one kind of information among the following information: a state of charge SOC, a state of power SOP and a state of health SOH.

In one possible implementation, the state of power SOP is related to temperature and the SOC.

In a third aspect, an energy storage system is provided, comprising a plurality of energy storage modules connected in series and the control device in the second aspect and any one of the possible implementations in the second aspect.

In one possible implementation, the energy storage system is a high-voltage direct-current direct-mounted energy storage system.

In a fourth aspect, a control device of an energy storage system is provided. The energy storage system comprises a plurality of energy storage modules connected in series. The control device comprises a memory and a processor. The memory is configured to store instructions. The processor is configured to read the instructions and perform the method in the first aspect and any one of the possible implementations in the first aspect according to the instructions.

In a fifth aspect, a chip is provided, comprising a processor configured to call a computer program from the memory and run the computer program to enable a device provided with the chip to perform the method in the first aspect and any one of the possible implementations in the first aspect.

In a sixth aspect, a computer program is provided, wherein the computer program enables a computer to perform the method in the first aspect and any one of the possible implementations in the first aspect.

In a seventh aspect, a computer-readable storage medium is provided, which is used for storing a computer program, and the computer program enables a computer to perform the method in the first aspect and any one of the possible implementations in the first aspect.

In an eighth aspect, a computer program product is provided, wherein the computer program product comprises a computer program instruction which enables the computer to perform the method in the first aspect and any one of the possible implementations in the first aspect.

**DESCRIPTION OF THE DRAWINGS**

FIG. 1 is a schematic architecture diagram of a direct-current direct-mounted energy storage system applicable to the embodiment of the present application.

FIG. 2a is a schematic structural diagram of an energy storage module in FIG. 1.

FIG. 2b is a schematic structural diagram of an energy storage module in FIG. 1.

FIG. 3 is a schematic block diagram of a control method of an energy storage system according to an embodiment of the present application.

FIG. 4 is another schematic block diagram of the control method of the energy storage system according to the embodiment of the present application.

FIG. 5 is yet another schematic block diagram of the control method of the energy storage system according to the embodiment of the present application.

FIG. 6 is yet another schematic block diagram of the control method of the energy storage system according to the embodiment of the present application.

FIG. 7 is a schematic flow diagram of a control method of an energy storage system according to an embodiment of the present application.

FIG. 8 is a schematic block diagram of a control device of an energy storage system according to an embodiment of the present application.

FIG. 9 is another schematic block diagram of the control device of the energy storage system according to the embodiment of the present application.

**DESCRIPTION OF EMBODIMENTS**

The technical solution in the embodiment of the present application will be clearly and completely described below in conjunction with the accompanying drawings in the embodiment of the present application. Obviously, the described embodiments are only a part of the embodiments of the present application, but not all of the embodiments. Based on the embodiments in the present application, all other embodiments obtained by those of ordinary skill in the art without creative work are within the scope of protection of the present application.

Unless otherwise defined, all technical and scientific terms used in the present application have the same meaning as commonly understood by one of ordinary skill in the art to which the present application pertains. The terms used in the description of the present application are to describe specific embodiments only and are not intended to limit the present application. The terms "including" and "having" and any variations thereof in the specification and claims of the present application and the above brief description of the drawings are intended to cover a non-exclusive inclusion. The terms "first", "second", and so on in the description and claims or accompanying drawings of the present application are intended to distinguish different objects, but not to describe particular sequences or primary-secondary relationships.

"Embodiments" mentioned in the present application mean that specific features, structures or features described in conjunction with embodiments can be comprised in at least one embodiment of the present application. The phrase appearing at each position of the description does not necessarily indicate the same embodiment and it is not an exclusively independent or alternative embodiment of other embodiments. Those skilled in the art understand implicitly and explicitly that the embodiments described in the present application can be combined with other embodiments.

In the description of the present application, it should be noted that unless otherwise expressly specified and limited, the terms "connected" and "attached" can be directly connected or indirectly connected through an intermediate medium, and can be an internal communication between two components. The specific meanings of the above terms in the present application may be understood by those of ordinary skill in the art depending on specific circumstances.

The term "and/or" in the present application is only an association relationship describing an association object, indicating that there may be three relationships, for example, A and/or B may indicate that A exists alone, A and B exist simultaneously, and B exists alone. In addition, the character "/" in the present application generally indicates that the association object is in a relationship of "or".

The energy storage system according to the embodiment of the present application is formed by a plurality of energy storage modules and other auxiliary devices connected in series. Each energy storage module among the plurality of energy storage modules may comprise at least one energy storage element. The energy storage element may have many implementations, for example, a battery, a super-capacitor, a flywheel energy storage, a gas compression energy storage or any combination thereof. In addition, other known devices capable of storing electric energy in this field can be chosen.

Generally, in the manufacturing and using process, there must be inconsistency of parameters such as voltages, capacities and internal resistance regarding the energy storage modules in the energy storage system, which always causes charge-discharge properties of one or more energy storage modules to be quicker or slower than other energy storage modules, and this leads to a phenomenon of inconsistency. With a gradual increase of inconsistency between the energy storage modules in the using process, performance degradation of some energy storage modules is sped up to influence the service life of the energy storage modules. Thus, balance control usually needs to be conducted on the energy storage modules in the energy storage system, i.e., in a charging and discharging process, putting-in and splitting of the energy storage modules in the energy storage system are controlled to balance charge-discharge properties between the energy storage modules.

At present, dynamic balance of the whole energy storage system is realized mainly based on a sequencing of states of charge (SOC) of the energy storage modules, However, only based on the sequencing of the SOCs of the energy storage modules, efficiency of the whole energy storage system may be reduced.

Thus, the embodiments of the present application provide a control method of an energy storage system. balance control is conducted on the energy storage system based on the difference value between the first state parameters of any two energy storage modules in the energy storage system, which is beneficial to improving efficiency of the whole energy storage system.

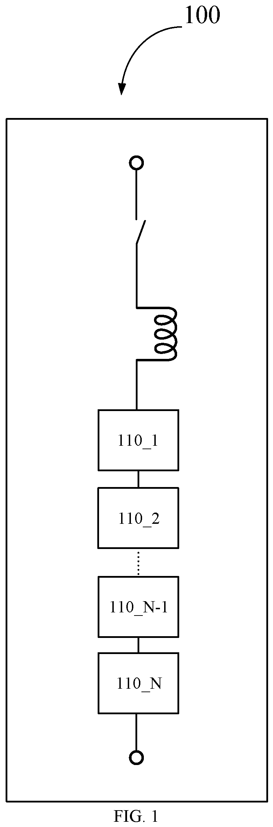

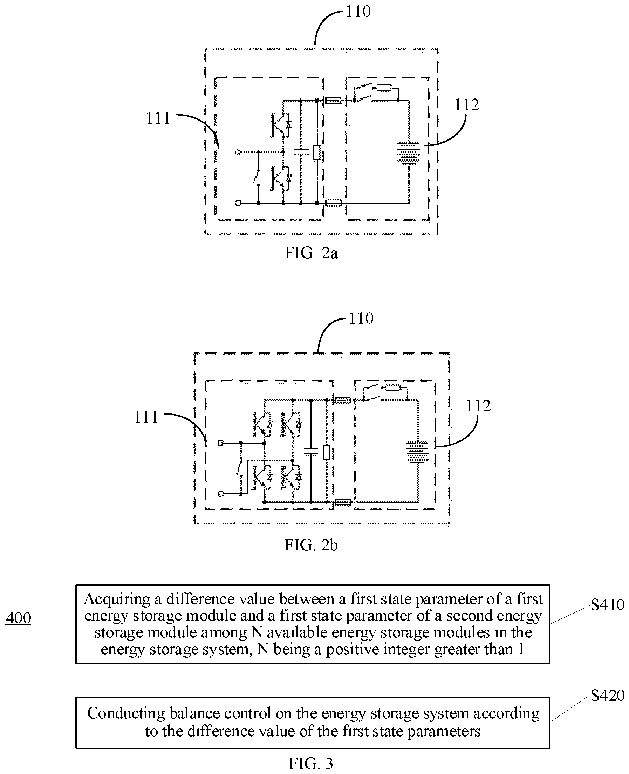

FIG. 1 is a schematic architecture diagram of a direct-current direct-mounted energy storage system according to the embodiment of the present application. As shown in FIG. 1, the direct-current direct-mounted energy storage system 100 comprises N energy storage modules 110 (110_1, 110_2, ... 110_N) connected in series, wherein each energy storage module 110 may be formed by a power submodule 111 in parallel connection with a battery module 112. Specifically, the power submodule 111 may be a half-bridge power submodule shown in FIG. 2a and may also be a full-bridge power submodule shown in FIG. 2b. The battery submodule 112 may be a single-branch series connection battery submodule and may also be a multi-branch parallel connection battery submodule.

FIG. 3 is a schematic block diagram of a control method 400 of an energy storage system according to an embodiment of the present application. The energy storage system comprises a plurality of energy storage modules connected in series. Optionally, the control method 400 may be performed by a controller in the high-voltage direct-current direct-mounted energy storage system shown in FIG. 1. Specifically, as shown in FIG. 3, the control method 400 may include a portion of or all of the following content:

S410, acquiring a difference value between a first state parameter of a first energy storage module and a first state parameter of a second energy storage module among N available energy storage modules in the energy storage system, N being a positive integer greater than 1; and

S420, conducting balance control on the energy storage system according to the difference value of the first state parameters.

It should be understood that the first state parameter may be a normalized parameter of battery performance of the energy storage modules. Specifically, the first state parameters may be functions of various parameters such as SOC, a state of power (SOP), a state of health (SOH) and temperatures. For example, the first state parameter=f(SOC, SOP, SOH). For another example, the first state parameter=SOC/SOH/SOP. For another example, the first state parameter=f(SOC, SOH) or f(SOP, SOH).

In general, available energy storage modules in the energy storage system may be determined before conducting balance control on the energy storage system. For example, unavailable energy storage modules in the energy storage system may be determined first and then subtracted from all the energy storage modules comprised in the energy storage system to obtain the available energy storage modules. The unavailable energy storage modules usually refer to the energy storage modules which cannot be put into the energy storage system due to various exceptions.

Optionally, the N available energy storage modules may be all the available energy storage modules in the energy storage system and may also be a portion of energy storage modules in the energy storage system. The first and second energy storage modules may be any two energy storage modules in the N available energy storage modules. Once the type of the first state parameter is determined, the controller may acquire the first state parameter of each energy storage module among the N available energy storage modules in real time and then may conduct balance control on the energy storage system according to the difference value of the first state parameters of any two energy storage modules therein.

In the embodiment, the difference value between the first state parameters of the energy storage modules is introduced in the process of conducting balance control on the energy storage system. On the one hand, charge-discharge properties between the energy storage modules in the energy storage system can be balanced, and the service life of the energy storage modules can be prolonged. On the other hand, different balance methods may be adopted based on the difference value of the first state parameters, which is beneficial to improving the efficiency of the energy storage system.

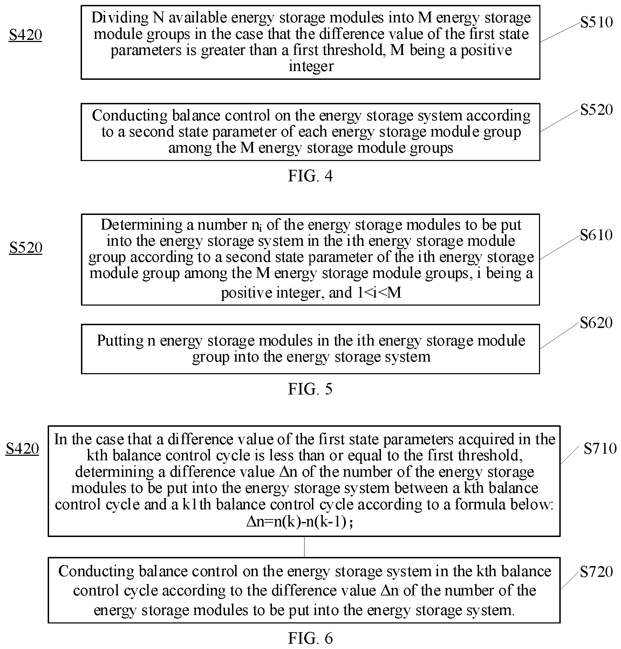

Optionally, as shown in FIG. 4, Step S420 includes a portion or all of the following content:

S510, dividing the N available energy storage modules into the M energy storage module groups in the case that the difference value of the first state parameters is greater than the first threshold, M being a positive integer; and

S520, conducting balance control on the energy storage system according to a second state parameter of each energy storage module group among the M energy storage module groups.

The N available energy storage modules are divided into the M energy storage module groups and may be equally divided into the M energy storage module groups, i.e., each energy storage module group includes d available energy storage modules. A number of the groups may be determined according to M=round(N/d), wherein round() refers to a roundup function. In other embodiments, the number of the energy storage modules included in the M energy storage module groups include may be unequal. In other words, suppose there are 6 available energy storage modules which may be divided into 3 energy storage module groups. The 3 energy storage module groups include 1 energy storage module, 2 energy storage modules and 3 energy storage modules respectively. The division way of the M energy storage module groups is not limited in the embodiment of the present application.

After the N available energy storage modules are divided into the M energy storage module groups, the controller may further determine the second state parameter of each energy storage module group among the M energy storage module groups and conduct balance control on the energy storage system based on the second state parameters. Optionally, the second state parameter may be a normalized parameter of battery performance of the energy storage module. Specifically, the second state parameters may be functions of various parameters such as SOC, a state of power (SOP), a state of health (SOH) and temperatures. For example, the second state parameter=f(SOC, SOP, SOH). For another example, the second state parameter SOX=SOC/SOH/SOP. For another example, the second state parameter=f(SOC, SOH) or f(SOP, SOH).

Optionally, the first threshold may be a preset value, an empirical value prestored in the controller.

In the embodiment, in the case that the difference value of the first state parameters is greater than the first threshold, it means that inconsistency between at least two energy storage modules among the N available energy storage modules is large. A current state of the energy storage modules may further increase the inconsistency. Thus, putting-in or splitting of the N available energy storage modules needs to be controlled again. At this time, the N available energy storage modules are divided into the M energy storage module groups. Based on the second state parameter of each energy storage module group among the M energy storage module groups, balance control is conducted on the energy storage modules. When the number of the energy storage modules in the energy storage system is too high, the computation amount of balance control can be reduced, and demands for a controller can be reduced.

Optionally, as shown in FIG. 5, Step S520 includes a portion or all of the following content:

S610, determining a number $n_i$ of the energy storage modules to be put into the energy storage system in the ith energy storage module group according to a second state parameter of the ith energy storage module group among the M energy storage module groups, wherein i is a positive integer, and $1 \leq i \leq M$; and

S620, putting $n_i$ energy storage modules in the ith available energy storage module group into the energy storage system.

For example, the N available energy storage modules are divided into 3 energy storage module groups. The controller may acquire the second state parameters of the 3 energy storage module groups respectively. The controller may determine the number $n_1$ of the energy storage modules to be put into the energy storage system in a first energy storage module group according to the second state parameter of the first energy storage module group, determine the number $n_2$ of the energy storage modules to be put into the energy storage system in a second energy storage module group according to the second state parameter of the second energy storage module group, and determine the number $n_3$ of the energy storage modules to be put into the energy storage system in a third energy storage module group according to the second state parameter of the third energy storage module group. Further, the controller may control $n_1$ energy storage modules in the first energy storage module group, $n_2$ energy storage modules in the second energy storage module group and $n_3$ energy storage modules in the third energy storage module group to be put into the energy storage system.

It should be understood that the second state parameter of one energy storage module group may be a sum of the second state parameters of all the energy storage modules in one energy storage module group, may also be a sum of the second state parameters of part of the energy storage modules in one energy storage module group, and may also be the second state parameter of any one of the energy storage modules in one energy storage module group, for example, a maximum value of the second state parameters of the energy storage modules in one energy storage module.

In the embodiment, the determining the number of the energy storage modules to be put into the energy storage system in the energy storage module group according to the second state parameter of the energy storage module group is beneficial to balancing charge-discharge properties between the energy storage module groups to prolong the service life of the energy storage system.

Optionally, in an example of the present application, Step S610 may include determining the number $n_i$ of the energy storage modules to be put into the energy storage system in the ith energy storage module group according to a sum $A_i$ of the second state parameters of all the energy storage modules in the ith energy storage module group, a sum A of the second state parameters of the N available energy storage modules and a total number n of the energy storage modules to be put into the energy storage system, and n is a positive integer less than or equal to N.

Further, the determining the number $n_i$ of the energy storage modules to be put into the energy storage system in the ith energy storage module group according to the sum $A_i$ of the second state parameters of all the energy storage modules in the ith energy storage module group, the sum A of the second state parameters of the N available energy storage modules and the total number n of the energy storage modules to be put into the energy storage system comprises determining the number $n_i$ of the energy storage modules to be put into the energy storage system in the ith energy storage module group according to the formula below: $n_i = n \ast A_i / A$.

In the embodiment, the number of the energy storage modules to be put into the energy storage system in the ith energy storage module group is determined according to a ratio of the sum of the second state parameters of all the energy storage modules in the ith energy storage module group to the sum of the second state parameters of the N available energy storage modules, which is more beneficial to balancing the charge-discharge properties between the energy storage module groups, thereby prolonging the service life of the energy storage system.

In another possible examples, conduct balance control on the energy storage system according to the sequencing of the second state parameters of all the energy storage module groups among the M energy storage module groups. For example, the sum of the second state parameters of all the energy storage modules in each energy storage module group among the M energy storage module groups may be determined, the sums of the second state parameters of all the energy storage module groups are sequenced from small to large, and in conjunction with the total number n of the energy storage modules to be put into the energy storage system, balance control is conducted on the energy storage system. Specifically, when the energy storage system is in a charging state, all the energy storage modules in former m energy storage module groups among the M energy storage module groups are put into the energy storage system. A total number of all the energy storage modules in the former m energy storage module groups should be less than or equal to the total number n of the energy storage modules to be put into the energy storage system. Alternatively, when the energy storage system is in a discharging state, all the energy storage modules in latter m energy storage module groups among the M energy storage module groups are put into the energy storage system. A total number of all the energy storage modules in the latter m energy storage module groups should be less than or equal to the total number n of the energy storage modules to be put into the energy storage system.

In other possible examples, balance control may be conducted on the energy storage system not based on the second state parameter of each energy storage module group among the M energy storage module groups. The energy storage modules to be put into the energy storage system in each energy storage module group may be equally divided directly according to the total number n of the energy storage modules to be put into the energy storage system and a group number M of the energy storage module groups, i.e., the number of the energy storage modules to be put into the energy storage system in each energy storage module group should be n/M.

It should be understood how to distribute the number of the energy storage modules to be put into the energy storage system in the M energy storage module groups according to the total number n of the energy storage modules to be put into the energy storage system is not limited in the embodiment of the present application.

Optionally, Step S620 includes: putting $n_i$ energy storage modules in the ith energy storage module group into the energy storage system, which comprises: putting $n_i$ energy storage modules with a minimum second state parameter in the ith energy storage module group into the energy storage system when the energy storage system is in a charging state, or putting $n_i$ energy storage modules with a maximum second state parameter in the ith energy storage module group into the energy storage system when the energy storage system is in a discharging state.

In an example, the control method 400 further comprises: acquiring a sequencing of the second state parameters of all the energy storage modules in the ith energy storage module group from small to large; the putting the $n_i$ energy storage modules with the minimum second state parameter in the ith energy storage module group into the energy storage system when the energy storage system is in a charging state or the putting the $n_i$ energy storage modules with the maximum second state parameter in the ith energy storage module group into the energy storage system when the energy storage system is in a discharging state comprises: putting former $n_i$ energy storage modules in the ith energy storage module group into the energy storage system when the energy storage system is in a charging state, or putting latter $n_i$ energy storage modules in the ith energy storage module group into the energy storage system when the energy storage system is in a discharging state.

In another example, the control method 400 also comprises acquiring a sequencing of the second state parameters of all the energy storage modules in the ith energy storage module group from large to small; the putting the $n_i$ energy storage modules with the minimum second state parameter in the ith energy storage module group into the energy storage system when the energy storage system is in a charging state or the putting the $n_i$ energy storage modules with the maximum second state parameter in the ith energy storage module group into the energy storage system when the energy storage system is in a discharging state comprises: putting latter $n_i$ energy storage modules in the ith energy storage module group into the energy storage system when the energy storage system is in a charging state, or putting former $n_i$ energy storage modules in the ith energy storage module group into the energy storage system when the energy storage system is in a discharging state.

In the embodiment, based on the sequencing of the second state parameters of all the energy storage modules in the ith energy storage module group, a determined number of the energy storage modules are selected from the ith energy storage module group and put into the energy storage system, which is beneficial to balancing charge-discharge properties between the energy storage modules in the same energy storage module group and may balance charge-discharge properties between the energy storage module groups, thereby being capable of prolonging the service life of the energy storage system.

Optionally, as shown in FIG. 6, Step 420 may include a portion of or all of the following content:

S710, determining a difference value $\Delta n$ of numbers of the energy storage modules to be put into the energy storage system between the kth balance control cycle and the (k-1)th balance control cycle in the case that the difference value of the first state parameters acquired in the kth balance control cycle is less than or equal to the first threshold according to a formula below: $\Delta n = n(k) - n(k-1)$, wherein $n(k)$ is the number of the energy storage modules to be put into the energy storage system in the kth balance control cycle, $n(k-1)$ is the number of the energy storage modules to be put into the energy storage system in the (k-1)th balance control cycle, and k is a positive integer greater than 1; and

S720, conducting balance control on the energy storage system in the kth balance control cycle according to the difference value Δn of the number of the energy storage modules to be put into the energy storage system.

It should be noted that various demands acquired by the controller may be continuously updated according to practical application scenes in the process of conducting balance control on the energy storage system. For example, the number n of the energy storage modules to be put into the energy storage module system is updated periodically. After various demands acquired by the controller are updated, the controller needs to conduct balance control on the energy storage system again by adopting the technical solutions according to the embodiments of the present application. In other words, according to the embodiments of the present application, balance control on the energy storage system has balance control cycles. Each balance control cycle has a number n of the energy storage modules to be put into the energy storage system.

Specifically, the controller needs to acquire the difference value between the first state parameters of any two energy storage modules among the N available energy storage modules first, further judges a difference between the number of the energy storage modules to be put into the energy storage system acquired in advance in the current balance control cycle and the number of the energy storage modules to be put into the energy storage system acquired in advance in the former balance control cycle in the case that the difference value of the first state parameters is less than or equal to the first threshold, and conducts balance control on the energy storage system based on the difference value of the energy storage modules to be put into the energy storage system acquired in advance in the two balance control cycles. For example, if the number of the energy storage modules to be put into the energy storage system acquired in the first balance control cycle is n(1), the number of the energy storage modules to be put into the energy storage system acquired in the second balance control cycle is n(2) and the difference value between the first state parameters of the first and second energy storage modules acquired in the second balance control cycle is less than or equal to the first threshold, the controller conducts balance control on the energy storage system based on n(2)-n(1) in the second balance control cycle.

In the embodiment, in the case that the difference value of the first state parameters acquired in the current balance control cycle is less than or equal to the first threshold, balance control may be conducted on the energy storage system in the current balance control cycle based on the difference between the number of the energy storage modules to be put into the energy storage system in the current balance control cycle and the number of the energy storage modules to be put into the energy storage system in the former balance control cycle, it helps to avoid repeated putting-in or splitting of the energy storage modules, thereby being capable of reducing on-off frequencies of switch devices in the energy storage modules and reducing wastage of the switch devices.

Optionally, in the embodiment of the present application, the conducting balance control on the energy storage system in the kth balance control cycle according to the difference value Δn of the number of the energy storage modules to be put into the energy storage system comprises: controlling the state of the N available energy storage modules to be in accord with the state of the N available energy storage modules in the (k-1)th balance control cycle in the case of Δn=0.

In the embodiment, when the difference between the numbers of the energy storage modules to be put into the energy storage system between two former and latter balance control cycles is 0, the states of the N available energy storage modules of the energy storage system in the latter balance control cycle and the former balance control cycle keep consistent with each other as much as possible, thereby being capable of minimizing the on-off frequencies of the switch devices in the energy storage modules and reducing wastage of the switch devices.

Optionally, in the embodiment of the present application, the conducting balance control on the energy storage system in the kth balance control cycle according to the difference value Δn of the number of the energy storage modules to be put into the energy storage system comprises: putting Δn energy storage modules among P available energy storage modules split in the (k-1)th balance control cycle into the energy storage system in the kth balance control cycle in the case of Δn>0, and P is a positive integer.

In other words, when the number of the energy storage modules to be put into the energy storage system acquired in advance in the latter balance control cycle is greater than that of the energy storage modules to be put into the energy storage system acquired in advance in the former balance control cycle, the states of the energy storage modules put into the energy storage system in the former balance control cycle may be controlled to remain unchanged. Just put a certain number of the energy storage modules not put into the energy storage system in the former balance control cycle into the energy storage system, and make sure that the number of the energy storage modules put into the energy storage system in the latter balance control cycle is equal to the number of the energy storage modules to be put into the energy storage system acquired in advance, thereby being capable of reducing the on-off frequencies of the switch devices of the energy storage modules in the balance control process as much as possible, and reducing wastage of the switch devices.

Optionally, in the embodiment of the present application, the putting the Δn energy storage modules among the P available energy storage modules split in the (k-1)th balance control cycle into the energy storage system in the kth balance control cycle in the case of Δn>0 comprises: putting Δn energy storage modules with a minimum third state parameter among the P available energy storage modules into the energy storage system in the kth balance control cycle in the case that Δn>0 and the energy storage system is in a charging state, or putting Δn energy storage modules with a maximum third state parameter among the P available energy storage modules into the energy storage system in the kth balance control cycle when the energy storage system is in a discharging state.

In an example, the control method 400 also includes: acquiring a sequencing of the third state parameters of the P available energy storage modules from small to large; the putting Δn energy storage modules with a minimum third state parameter among the P available energy storage modules into the energy storage system in the kth balance control cycle in the case that Δn>0 and the energy storage system is in a charging state, or the putting Δn energy storage modules with a maximum third state parameter among the P available energy storage modules into the energy storage system in the kth balance control cycle when the energy storage system is in a discharging state comprises: putting former Δn energy storage modules among the P available energy storage modules into the energy storage system in the kth balance control cycle in the case that Δn>0 and the energy storage system is in a charging state, or putting latter Δn energy storage modules among the P available energy storage modules into the energy storage system in the kth balance control cycle in the case that Δn>0 and the energy storage system is in a discharging state.

In another example, the control method 400 also includes: acquiring a sequencing of the third state parameters of the P available energy storage modules from large to small; the putting Δn energy storage modules with a minimum third state parameter among the P available energy storage modules into the energy storage system in the kth balance control cycle in the case that Δn>0 and the energy storage system is in a charging state, or the putting Δn energy storage modules with a maximum third state parameter among the P available energy storage modules into the energy storage system in the kth balance control cycle when the energy storage system is in a discharging state comprises: putting latter Δn energy storage modules among the P available energy storage modules in the kth balance control cycle in the case that Δn>0 and the energy storage system is in a charging state, or putting former Δn energy storage modules among the P available energy storage modules into the energy storage system in the kth balance control cycle in the case that Δn>0 and the energy storage system is in a discharging state.

Optionally, the third state parameter may be a normalized parameter of battery performance of the energy storage module. Specifically, the third state parameters may be functions of various parameters such as SOC, a state of power (SOP), a state of health (SOH) and temperatures. For example, the third state parameter=f(SOC, SOP, SOH). For another example, the third state parameter SOX=SOC/SOH/SOP. For another example, the third state parameter=f(SOC, SOH) or f(SOP, SOH).

In the embodiment, based on the sequencing of the third state parameters of the split P available energy storage modules, a determined number of the energy storage modules are selected from the P available energy storage modules and put into the energy storage system, which is beneficial to balancing charge-discharge properties between the energy storage modules in the energy storage system, thereby being capable of prolonging the service life of the energy storage system.

Optionally, in the embodiment of the present application, the conducting balance control on the energy storage system in the kth balance control cycle according to a difference value Δn of the number of the energy storage modules to be put into the energy storage system comprises: splitting the Δn energy storage modules among the Q available energy storage modules put into the energy storage system in the (k-1)th balance control cycle from the energy storage system in the kth balance control cycle in the case of Δn<0, and Q is a positive integer.

In other words, when the number of the energy storage modules to be put into the energy storage system acquired in advance in a latter balance control cycle is less than that of the energy storage modules to be put into the energy storage system acquired in advance in a former balance control cycle, the states of the energy storage modules split from the energy storage system in the former balance control cycle may be controlled to remain unchanged. Just split a certain number of the energy storage modules put into the energy storage system in the former balance control cycle from the energy storage system, and make sure that the number of the energy storage modules put into the energy storage system in the latter balance control cycle is equal to the number of the energy storage modules to be put into the energy storage system acquired in advance, thereby being capable of minimizing the on-off frequencies of switch devices of the energy storage modules in the balance control process, and reducing wastage of the switch devices.

Optionally, in the embodiment of the present application, the splitting the Δn energy storage modules among the Q available energy storage modules put into the energy storage system in the (k-1)th balance control process of the energy storage system from the energy storage system in the kth balance control cycle in the case of Δn<0 comprises: splitting Δn energy storage modules with a maximum third state parameter among the Q available energy storage modules from the energy storage system in the kth balance control cycle in the case that Δn<0 and the energy storage system is in a charging state, or splitting Δn energy storage modules with a minimum third state parameter among the Q available energy storage modules from the energy storage system in the kth balance control cycle when the energy storage system is in a discharging state.

In an example, the control method 400 also includes: acquiring a sequencing of the third state parameters of the Q available energy storage modules from small to large; the splitting $\Delta n$ energy storage modules with a maximum third state parameter among the Q available energy storage modules from the energy storage system in the kth balance control cycle in the case that $\Delta n<0$ and the energy storage system is in a charging state or the splitting $\Delta n$ energy storage modules with a minimum third state parameter among the Q available energy storage modules from the energy storage system in the kth balance control cycle when the energy storage system is in a discharging state comprises: splitting latter $\Delta n$ energy storage modules among the Q available energy storage modules from the energy storage system in the kth balance control cycle in the case that $\Delta n<0$ and the energy storage system is in a charging state, or splitting former $\Delta n$ energy storage modules among the Q available energy storage modules from the energy storage system in the kth balance control cycle in the case that $\Delta n<0$ and the energy storage system is in a discharging state.

In another example, the control method 400 also includes: acquiring a sequencing of the third state parameters of the Q available energy storage modules from large to small; the splitting the $\Delta n$ energy storage modules with the maximum third state parameter among the Q available energy storage modules from the energy storage system in the kth balance control cycle in the case that $\Delta n<0$ and the energy storage system is in a charging state or the splitting the $\Delta n$ energy storage modules with the minimum third state parameter among the Q available energy storage modules from the energy storage system in the kth balance control cycle when the energy storage system is in a discharging state comprises: splitting the former $\Delta n$ energy storage modules among the Q available energy storage modules from the energy storage system in the kth balance control cycle in the case that $\Delta n<0$ and the energy storage system is in a charging state, or splitting the latter $\Delta n$ energy storage modules among the Q available energy storage modules from the energy storage system in the kth balance control cycle in the case that $\Delta n<0$ and the energy storage system is in a discharging state.

In the embodiment, based on the sequencing of the third state parameters of the Q available energy storage modules put into the energy storage system, a determined number of the energy storage modules are selected from the Q available energy storage modules and put into the energy storage system, which is beneficial to balancing charge-discharge properties between the energy storage modules in the energy storage system, thereby being capable of prolonging the service life of the energy storage system.

It should be noted that the state parameters adopted for the sequencing in the case of $\Delta n<0$ and

the sequencing in the case of $\Delta n>0$ may be the same and may also be different. For example, the sequencing in the case of $\Delta n<0$ is the sequencing of SOC, and the sequencing in the case of $\Delta n>0$ is the sequencing of SOP.

In addition, the first state parameter, the second state parameter and the third state parameter may be the same, may be partially the same and may also be totally different. For example, the first state parameter, the second state parameter and the third state parameter may be SOP. For another example, the first state parameter and the second state parameter are SOP, and the third state parameter is a function of SOC and SOH. For another example, the first state parameter is a function of SOC and SOP, the second state parameter is SOP, and the third state parameter is a function of SOP and SOH.

Optionally, in the embodiment present application, the SOP is usually related to temperature and SOC. For example, a mapping table of SOP, temperature and SOC may be stored in the controller. When acquiring the temperature and the SOC of the energy storage module, the controller may look up the mapping table to acquire a corresponding SOP.

In the embodiment, if the state parameter adopts a function of SOP, effects of the temperature and charging and discharging power on balance control can be fully considered so that the whole balance control process of the energy storage system is no longer limited by the charging and discharging power of a single energy storage module; if the state parameter adopts a function of SOH, the problems of different aging degrees and large parameter variations of energy storage modules after long-time running can be solved, thereby being beneficial to improving the reliability of the energy storage system.

Optionally, in the embodiment of the present application, the first energy storage module is an energy storage module with a maximum first state parameter among the N available energy storage modules, and the second energy storage module is an energy storage module with a minimum first state parameter among the N available energy storage modules.

In other words, the difference value between the first state parameters of the first and second energy storage modules is a maximum difference value between the first state parameters of the N available energy storage modules. For example, a sequencing from small to large or from large to small may be conducted on the first state parameters of the N available energy storage modules to find out the energy storage module with the maximum first state parameter and the energy storage module with the minimum first state parameter. The difference value between the first state parameters of the energy storage module with the maximum first state parameter and the energy storage module with the minimum first state parameter is calculated to serve as a basis for conducting balance control on the energy storage system.

In the embodiment, balance control is conducted on the energy storage system by acquiring a maximum difference value between the first state parameters of the N available energy storage modules. The difference value between the first state parameters of any two of the other energy storage modules may be less than the first threshold directly by default in the case that the maximum difference value is less than the first threshold, which can avoid the situation that which balance control method can be adopted is determined by acquiring the difference value of a plurality of first state parameters, thereby being capable of reducing the computation amount of balance control, increasing the speed of balance control and reducing demands for the controller. In addition, it is necessary to regain control of putting-in and splitting of N available energy storage modules in the case that the maximum difference value is greater than the first threshold, thereby being capable of avoiding unnecessary on-off actions as much as possible, reducing the on-off frequencies of the switch devices and lowering wastage of the switch devices.

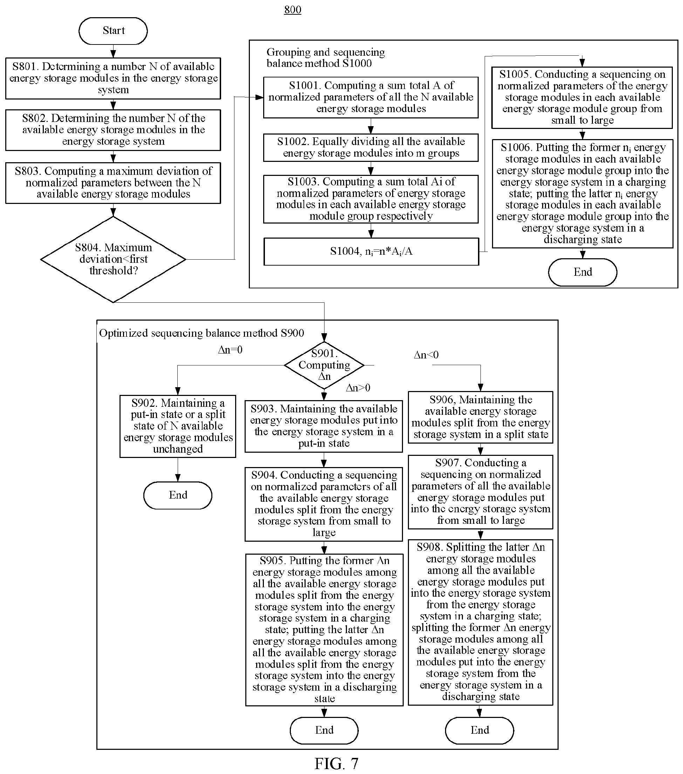

The control method of the energy storage system will be described in detail below in conjunction with FIG. 7 according to the embodiment of the present application, wherein the energy storage system comprises a plurality of energy storage modules connected in series. As shown in FIG. 7, the control method 800 includes a portion or all of the following steps.

S801. Determining a number N of available energy storage modules in the energy storage system, N being less than or equal to a total number R of the energy storage modules comprised in the energy storage system.

Optionally, a number $n_{na}$ of unavailable energy storage modules in the energy storage system may be determined first, and then a number N of available energy storage modules in the energy storage system is determined according to $R-n_{na}$.

S802. Determining a number of the energy storage modules to be put into the energy storage system, wherein n is less than or equal to N, otherwise balance control will not be conducted on the energy storage system, i.e., the N available energy storage modules are all put into the energy storage system.

S803. Computing a maximum deviation between normalized parameters of the N available energy storage modules.

Specifically, the controller may collect a normalized parameter of each energy storage module among the N available energy storage modules in real time and compute the maximum deviation between the normalized parameters of the energy storage modules, for example, the controller may conduct a sequencing on the normalized parameters of the N available energy storage modules from small to large and then compute a difference value between the normalized parameters of the energy storage modules at two ends, namely the maximum deviation.

Optionally, the normalized parameter is a function of various parameters of battery performance of the energy storage module. For example, the normalized parameter is a function of SOC, SOP and SOH. For another example, the normalized parameter is SOC, SOP or SOH. For another example, the normalized parameter is a function of any two parameters among SOC, SOP and SOH, wherein SOP=table (temperature, SOC), i.e., the SOP may be acquired by looking up the table of the temperature and the SOC.

S804. Judging whether the maximum deviation acquired in S803 is less than or equal to the first threshold or not; if the maximum deviation is less than or equal to the first threshold, proceeding to an optimized sequencing balance method S900 so that the energy storage modules put into or split from the energy storage system maintain original states as much as possible in a next balance control process to reduce unnecessary on-off actions; if the maximum deviation is greater than the first threshold, proceeding to a grouping and sequencing balance method S1000, accelerating the sequencing to achieve dynamic balance between the energy storage modules as soon as possible.

S900 may specifically include a portion of or all of the following content.

S901. Computing a variation quantity $\Delta n=n(k)-n(k-1)$ of the number of the energy storage modules to be put into the energy storage system, wherein n(k) represents a number of the energy storage modules to be put into the energy storage system in the kth balance control cycle, and n(k-1) represents a number of the energy storage modules to be put into the energy storage system in the (k-1)th balance control cycle.

S902. Maintaining a putting-in state or a split state of the N available energy storage modules unchanged if the acquired $\Delta n=0$ in S901.

S903. Maintaining the available energy storage modules put into the energy storage system in a put-in state if the acquired $\Delta n>0$ in S901, and proceeding to Step S904.

S904. Conducting a sequencing on the normalized parameters of all the available energy storage modules split from the energy storage system from small to large.

S905. Putting the former $\Delta n$ energy storage modules among all the available energy storage modules split from the energy storage system into the energy storage system in a charging state; putting the latter $\Delta n$ energy storage modules among all the available energy storage modules split from the energy storage system into the energy storage system in a discharging state.

S906. Maintaining all the available energy storage modules split from the energy storage system in a split state if the acquired $\Delta n<0$ in S901, and proceeding to Step S907.

S907. Conducting a sequencing on normalized parameters of all the available energy storage modules put into the energy storage system from small to large.

S908. Splitting latter $\Delta n$ energy storage mod-

ules among all the available energy storage modules put into the energy storage system from the energy storage system in a charging state; splitting former Δn energy storage modules among all the available energy storage modules put into the energy storage system from the energy storage system in a discharging state.

S1000 may specifically include a portion of or all of the following content.

S1001. Computing a sum total A of normalized parameters of all the available energy storage modules.

S1002. Equally dividing all the available energy storage modules into m groups, wherein each group may comprise d available energy storage modules.

S1003. Computing a sum total $A_i$ of normalized parameters of the energy storage modules in each available energy storage module group respectively, wherein $A_i$ represents a sum total of normalized parameters of an ith energy storage module group.

The number of the energy storage modules to be put into the energy storage system in each available energy storage module group is computed according to $n_i=n*A_i/A$. $n_i$ represents the number of the energy storage modules to be put into the energy storage system in the ith energy storage module group.

S1004. Conducting a sequencing on normalized parameters of the energy storage modules in each available energy storage module group from small to large.

S1005. Putting former $n_i$ energy storage modules in each available energy storage module group into the energy storage system in a charging state, and putting latter $n_i$ energy storage modules in each available energy storage module group into the energy storage system in a discharging state.

It should be understood that in the embodiments of the present application, the serial numbers of the processes do not mean the execution sequence, and the execution sequence of each process should be determined by its function and internal logic, and should not constitute any limitation on the implementation processes of the embodiments of the present application.

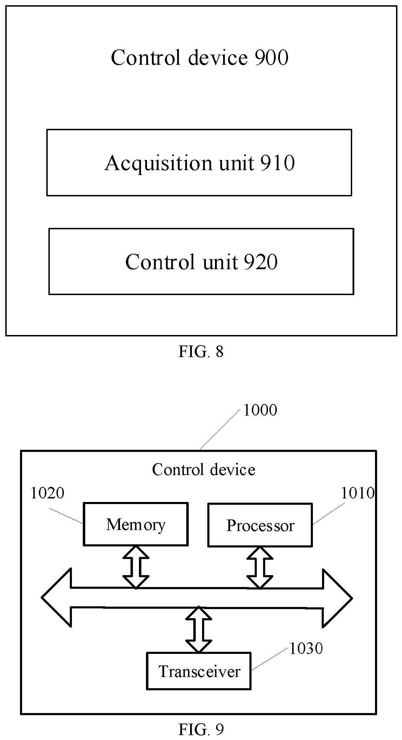

The control method of the embodiment of the present application has been described in detail above, and the control device of the energy storage system will be described in detail below in conjunction with FIG. 8 and FIG. 9 according to the embodiment of the present application. The technical features described according to the method embodiments are suitable for device embodiments below.

FIG. 8 is a schematic block diagram of a control device 900 of an energy storage system according to the embodiment of the present application, wherein the energy storage system comprises a plurality of energy storage modules connected in series. As shown in FIG. 8, the control device may include a portion or all of the following content:

an acquisition unit 910 configured to acquire a difference value between a first state parameter of a first energy storage module and a first state parameter of a second energy storage module among N available energy storage modules in the energy storage system, N being a positive integer; and

a control unit 920 configured to conduct balance control on the energy storage system according to the difference value of the first state parameters.

Optionally, in the embodiment of the present application, the control unit 920 is specifically configured to: divide the N available energy storage modules into M energy storage module groups in the case that the difference value of the first state parameters is greater than the first threshold, M being a positive integer; and conduct balance control on the energy storage system according to a second state parameter of each energy storage module group among the M energy storage module groups.

Optionally, in the embodiment of the present application, the control unit 920 comprises: a determination subunit configured to determine a number $n_i$ of the energy storage modules to be put into the energy storage system in the ith energy storage module group according to the second state parameter of the ith energy storage module group among the M energy storage module groups, wherein i is a positive integer, and $1 \leq i \leq M$; and a control subunit configured to put the $n_i$ energy storage modules in the ith energy storage module group into the energy storage system.

Optionally, in the embodiment of the present application, the determination subunit is specifically configured to determine the number $n_i$ of the energy storage modules to be put into the energy storage system in the ith energy storage module group according to a sum $A_i$ of the second state parameters of all the energy storage modules in the ith energy storage module group, a sum A of the second state parameters of the N available energy storage modules and a total number n of the energy storage modules to be put into the energy storage system, and n is a positive integer being less than or equal to N.

Optionally, in the embodiment of the present application, the determination subunit is specifically configured to determine the number $n_i$ of the energy storage modules to be put into the energy storage system in the ith energy storage module group according to a formula below: $n_i=n*A_i/A$.

Optionally, in the embodiment of the present application, the control subunit is specifically configured to put $n_i$ energy storage modules with a minimum second state parameter in the ith energy storage module group into the energy storage system when the energy storage system is in a charging state, or put $n_i$ energy storage modules with a maximum second state parameter in the ith energy storage module group when the energy storage system is in a discharging state.

Optionally, in the embodiment of the present application, the acquisition unit 910 is also configured to acquire a sequencing of the second state parameters of all the energy storage modules in the ith energy storage module group from small to large; the control subunit is specifically configured to put former $n_i$ energy storage modules in the ith energy storage module group into the energy storage system when the energy storage system is in a charging state, or put latter $n_i$ energy storage modules in the ith energy storage module group into the energy storage system when the energy storage system is in a discharging state.

Optionally, in the embodiment of the present application, the control unit 920 comprises: a determination subunit configured to determine a difference value $\Delta n$ of the number of the energy storage modules to be put into the energy storage system between the kth balance control cycle and the (k-1)th balance control cycle in the case that the difference value of the first state parameters acquired in the kth balance control cycle is less than or equal to the first threshold according to a formula below: $\Delta n = n(k) - n(k-1)$, wherein $n(k)$ is the number of the energy storage modules to be put into the energy storage system in the kth balance control cycle of the energy storage system, $n(k-1)$ is the number of the energy storage modules to be put into the energy storage system in the (k-1)th balance control cycle, and k is a positive integer greater than 1; and a control subunit configured to conduct balance control on the energy storage system in the kth balance control cycle according to the difference value $\Delta n$ of the number of the energy storage modules to be put into the energy storage system.

Optionally, in the embodiment of the present application, the control subunit is specifically configured to control the state of the N available energy storage modules to be in accord with the state of the N available energy storage modules in the (k-1)th balance control cycle in the kth balance control cycle in the case of $\Delta n = 0$.

Optionally, in the embodiment of the present application, the control subunit is specifically configured to put the $\Delta n$ energy storage modules among P available energy storage modules split in the (k-1)th balance control cycle into the energy storage system in the kth balance control cycle in the case of $\Delta n > 0$, and P is a positive integer.

Optionally, in the embodiment of the present application, the control subunit is specifically configured to put the $\Delta n$ energy storage modules with a minimum third state parameter among the P available energy storage modules into the energy storage system in the kth balance control cycle in the case that $\Delta n > 0$ and the energy storage system is in a charging state, or put the $\Delta n$ energy storage modules with a maximum third state parameter among the P available energy storage modules into the energy storage system in the kth balance control cycle when the energy storage system is in a discharging state.

Optionally, in the embodiment of the present application, the acquisition unit 910 is also configured to acquire a sequencing of the third state parameters of the P available energy storage modules from small to large; the control subunit is specifically configured to: put former $\Delta n$ energy storage modules among the P available energy storage modules into the energy storage system in the kth balance control cycle in the case that $\Delta n > 0$ and the energy storage system is in a charging state, or put latter $\Delta n$ energy storage modules among the P available energy storage modules into the energy storage system in the kth balance control cycle in the case that $\Delta n > 0$ and the energy storage system is in a discharging state.

Optionally, in the embodiment of the present application, the control subunit is specifically configured to split $\Delta n$ energy storage modules among Q available energy storage modules put into the energy storage system in the (k-1)th balance control cycle from the energy storage system in the kth balance control cycle in the case of $\Delta n < 0$, and Q is a positive integer.

Optionally, in the embodiment of the present application, the control subunit is specifically configured to split $\Delta n$ energy storage modules with a maximum third state parameter among the Q available energy storage modules from the energy storage system in the kth balance control cycle in the case that $\Delta n < 0$ and the energy storage system is in a charging state, or split $\Delta n$ energy storage modules with a minimum third state parameter among the Q available energy storage modules from the energy storage system in the kth balance control cycle when the energy storage system is in a discharging state.

Optionally, in the embodiment of the present application, the acquisition unit 910 is also configured to acquire a sequencing of the third state parameters of the Q available energy storage modules from small to large; the control subunit is specifically configured to split the latter $\Delta n$ energy storage modules among the Q available energy storage modules from the energy storage system in the kth balance control cycle in the case that $\Delta n < 0$ and the energy storage system is in a charging state, or split the former $\Delta n$ energy storage modules among the Q available energy storage modules from the energy storage system in the kth balance control cycle in the case that $\Delta n < 0$ and the energy storage system is in a discharging state.

Optionally, in the embodiment of the present application, the first energy storage module is an energy storage module with a maximum first state parameter among the N available energy storage modules, and the second energy storage module is an energy storage module with a minimum first state parameter among the N available energy storage modules.

Optionally, in the embodiment of the present application, the state parameter is related to at least one kind of information among the following information: a state of charge SOC, a state of power SOP and a state of health SOH.

Optionally, in the embodiment of the present application, the state of power SOP is related to temperature and SOC.

It should be understood that the above and other operations and/or functions of the modules in the control device 900 are for implementations of corresponding flows in the methods in FIG. 3 to FIG. 7, for brevity, it is not described again here.

Optionally, the embodiment of the present application also provides an energy storage system, which comprises a plurality of energy storage modules connected in series and the control device 400 according to the embodiments of the present application above. The control device is configured to conduct balance control on a plurality of energy storage modules.

Optionally, the energy storage system may be a high-voltage direct-current direct-mounted energy storage system.

FIG. 9 is a schematic block diagram of a control device 1000 of an energy storage system according to the embodiment of the present application, As shown in FIG. 9, the control device 1000 comprises a processor 1010 and a memory 1020, wherein the memory 1020 is configured to store instructions, and the processor 1010 is configured to read the instructions and perform the foregoing methods in the embodiments of the present application based on the instructions, wherein the memory 1020 may be an individual device independent of the processor 1010 and may also be integrated into the processor 1010.

Optionally, as shown in FIG. 9, the charging control device 1000 may also comprise a transceiver 1030. The processor 1010 may control the transceiver 1030 to communicate with other devices. Specifically, the transceiver may send information or data to other devices, or receive information or data sent by other devices.

The embodiment of the present application also provides a computer storage medium for storing a computer program. The computer program is configured to perform the foregoing methods according to the embodiments of the present application.

It should be understood that the processor may also be an integrated circuit chip and has a signal processing capability according to the embodiment of the present application. During the implementing process, the steps according to the method embodiments above may be completed through an integrated logic circuit of hardware in the processor or instructions in the form of software. The process may be a general-purpose processor, a digital signal processor (DSP), an application specific integrated circuit (ASIC), a field programmable gate array (FPGA) or other programmable logic devices, discrete or transistor logic devices and discrete hardware components. The processor may implement or execute the methods, steps and logic block diagrams disclosed according to the embodiments of the present application. The general-purpose processor may be a microprocessor or may also be any conventional processor, and so on. The steps of the method disclosed in conjunction with the embodiments of the present application may be embodied directly in a hardware decoding processor to be executed and completed or in a combination of hardware and software modules in the decoding processor to be executed and completed. The software modules may be located in a mature storage medium of the field, such as random-access memory, flash memory, read-only memory, a programmable read-only memory or an electrically erasable programmable memory and a register. The storage medium is located in the memory and the processor reads information in the memory and is in conjunction with hardware thereof to complete the steps of the methods.

It should be understood that the memory may be a volatile memory or a non-volatile memory, or may include both the volatile memory and the non-volatile memory according to the embodiments of the present application. The non-volatile memory may be a read-only memory (ROM), a programmable ROM (PROM), an erasable PROM (EPROM), an electrically EPROM (EEPROM) or a flash memory. The volatile memory may be a random-access memory (RAM) and serves as an external cache. Through illustrative but not limiting explanations, many forms of RAMs are available, such as a static RAM (SRAM), a dynamic RAM (DRAM), a synchronous DRAM (SDRAM), a double-data-rate SDRAM (DDR SDRAM), an enhanced SDRAM (ESDRAM), a synchlink DRAM (SLDRAM) and a direct rambus RAM (DR RAM). It should be noted that the memory of the system and methods described herein is intended to include but is not limited to these and any other suitable types of memories.

The embodiment of the present application also provides a computer-readable storage medium for storing a computer program.

Optionally, the computer-readable storage medium may be applied to the charging control device according to the embodiment of the present application. The computer program enables a computer to perform corresponding flows implemented by the charging control device in the methods according to the embodiments of the present application, and for brevity, it is not described here.

The embodiment of the present application also provides a computer program product which comprises computer program instructions.

Optionally, the computer program product may be applied to the charging control device according to the embodiment of the present application. The computer program instructions enable a computer to perform corresponding flows implemented by the charging control device in the methods according to the embodiments of the present application, and for brevity, it is not described here.

The embodiment of the present application also provides a computer program.

Optionally, the computer program may be applied to the charging control device according to the embodiment of the present application. When run in a computer, the computer program enables the computer to perform corresponding flows implemented by the charging control device in the methods according to the embodiments of the present application, and for brevity, it is not described here.

Those of ordinary skill in the art may be aware that units, algorithms and steps in the examples described in conjunction with the embodiments of the present application disclosed herein can be realized through electronic hardware or a combination of computer software and electronic hardware. Whether these functions are performed in the form of hardware or software depends on specific application and design constraint conditions of the technical scheme. Skilled artisans may implement the described functions of each specific application in different ways, but such implementation should not be interpreted as a departure from the scope of the present application.

Those skilled in the art can clearly understand that, for the convenience and brevity of description, the specific working process of the system, devices and units described above may refer to the corresponding process in the foregoing method embodiments, which will not be repeated here.

In the several embodiments provided in the present application, it should be understood that the disclosed system, devices and methods may be implemented in other manners. For example, the device embodiments described above are only illustrative. For example, the division of units is only a logical function division. In actual implementation, there may be other division methods. For example, multiple units or components may be combined or integrated into another system, or some features may be omitted, or not implemented. In addition, the displayed or discussed mutual coupling or direct coupling or communication connection may be indirect coupling or communication connection through some interfaces, devices or units, and may be in electrical, mechanical or other forms.

The units described as separate components may or may not be physically separated, and the components displayed as units may or may not be physical units, i.e., they may be located in one place, or they may be distributed on multiple network units. Some or all of the units may be selected according to actual needs to achieve the purposes of the schemes of the embodiments.

In addition, the functional units in the various embodiments of the present application may be integrated into one processing unit, or each unit may exist alone physically, or two or more units may be integrated into one unit.

The functions, if implemented in the form of software functional units and sold or used as separate products, may be stored in a computer-readable storage medium. Based on such understanding, the technical solution of the present application, which is essential or contributes to the prior art, or a part of the technical solution, may be embodied in the form of a computer software product, which is stored in a storage medium, including a plurality of instructions used to cause a computer device (which may be a personal computer, a server, or a network device, etc.) to perform all or part of the steps of the methods described in the embodiments of the present application. The foregoing storage medium includes various mediums capable of storing program codes, such as a U disk, a mobile hard disk, a ROM, a RAM, a magnetic disk or an optical disk.

The above is only the specific implementations of the present application, but the scope of the present application is not limited thereto, and any person skilled in the art can easily think of changes or substitutions within the technical scope of the present application. It should be covered by the scope of the present application. Thus, the protection scope of the present application should be determined by the scope of the claims.

## Claims

1. A control method of an energy storage system, wherein the energy storage system comprises a plurality of energy storage modules connected in series, and the control method comprises:

   acquiring a difference value between a first state parameter of a first energy storage module and a first state parameter of a second energy storage module among N available energy storage modules in the energy storage system, N being a positive integer greater than 1; and
   conducting balance control on the energy storage system according to the difference value between the first state parameters.

2. The control method according to claim 1, wherein the conducting balance control on the energy storage system according to the difference value between the first state parameters comprises:

   dividing the N available energy storage modules into M energy storage module groups in the case that the difference value between the first state parameters is greater than a first threshold, M being a positive integer; and
   conducting balance control on the energy storage system according to a second state parameter of each energy storage module group among the M energy storage module groups.

3. The control method according to claim 2, wherein the conducting balance control on the energy storage system according to the second state parameter of each energy storage module group among the M energy storage module groups comprises:

according to the second state parameter of an ith energy storage module group among the M energy storage module groups, determining a number $n_i$ of the energy storage modules to be put into the energy storage system in the ith energy storage module group, wherein i is a positive integer, and $1 \leq i \leq M$; and

putting $n_i$ energy storage modules in the ith energy storage module group into the energy storage system.

4. The control method according to claim 3, wherein the determining the number $n_i$ of the energy storage modules to be put into the energy storage system in the ith energy storage module group according to the second state parameter of the ith energy storage module group among the M energy storage module groups comprises:

according to a sum $A_i$ of second state parameters of all the energy storage modules in the ith energy storage module group, a sum A of second state parameters of the N available energy storage modules, and a total number n of the energy storage modules to be put into the energy storage system, determining a number $n_i$ of the energy storage modules to be put into the energy storage system in the ith energy storage module group, n being a positive integer less than or equal to N.

5. The control method according to claim 4, wherein the determining the number $n_i$ of the energy storage modules to be put into the energy storage system in the ith energy storage module group according to the sum $A_i$ of the second state parameters of all the energy storage modules in the ith energy storage module group, the sum A of the second state parameters of the N available energy storage modules and the total number n of the energy storage modules to be put into the energy storage system comprises:

determining the number $n_i$ of the energy storage modules to be put into the energy storage system in the ith energy storage module group according to a formula below:

$$n_i = n * A_i / A.$$

6. The control method according to any one of claims 3 to 5, wherein the putting the $n_i$ energy storage modules in the ith energy storage module group into the energy storage system comprises:

putting the $n_i$ energy storage modules with a minimum second state parameter in the ith energy storage module group into the energy storage system when the energy storage system is in a charging state, or putting the $n_i$ energy storage modules with a maximum second state parameter in the ith energy storage module group into the energy storage system when the energy storage system is in a discharging state.

7. The control method according to claim 6, further comprising:

acquiring a sequencing of second state parameters of all the energy storage modules in the ith energy storage module group from smallest to largest;

wherein the putting the $n_i$ energy storage modules with the minimum second state parameter in the ith energy storage module group into the energy storage system when the energy storage system is in a charging state, or putting the $n_i$ energy storage modules with the maximum second state parameter in the ith energy storage module group into the energy storage system when the energy storage system is in a discharging state comprises:

putting top $n_i$ energy storage modules in the ith energy storage module group into the energy storage system when the energy storage system is in a charging state, or putting bottom $n_i$ energy storage modules in the ith energy storage module group into the energy storage system when the energy storage system is in a discharging state.

8. The control method according to claim 1, wherein the conducting balance control on the energy storage system according to the difference value between the first state parameters comprises:

in the case that a difference value between the first state parameters acquired in a kth balance control cycle is less than or equal to the first threshold, determining a difference value $\Delta n$ between the number of energy storage modules to be put into the energy storage system in the kth balance control cycle and the number of energy storage modules to be put into the energy storage system in a (k-1)th balance control cycle according to a formula below:

$\Delta n = n(k) - n(k-1)$, wherein $n(k)$ is the number of the energy storage modules to be put into the energy storage system in the kth balance control cycle on the energy storage system, $n(k-1)$ is the number of the energy storage modules to be put into the energy storage system in the (k-1)th balance control cycle, and k is a positive integer greater than 1; and

conducting balance control on the energy storage system in the kth balance control cycle according to the difference value $\Delta n$ between the number of the energy storage modules to be put into the energy storage system.

9. The control method according to claim 8, wherein the conducting balance control on the energy storage system in the kth balance control cycle according to the difference value Δn between the number of the energy storage modules to be put into the energy storage system comprises:
controlling a state of the N available energy storage modules to be in accord with a state of the N available energy storage modules in the (k-1)th balance control cycle in the kth balance control cycle in the case that Δn=0.

10. The control method according to claim 8, wherein the conducting kth balance control on the energy storage system in the kth balance control cycle according to the difference value Δn between the number of the energy storage modules to be put into the energy storage system comprises:
puttingΔn energy storage modules, among P available energy storage modules having been split in the (k-1)th balance control cycle, into the energy storage system in the kth balance control cycle in the case that Δn>0, P being a positive integer.

11. The control method according to claim 10, wherein the putting the Δn energy storage modules, among the P available energy storage modules having been split in the (k-1)th balance control cycle, into the energy storage system in the kth balance control cycle in the case that Δn>0 comprises:
puttingΔn energy storage modules with a minimum third state parameter among the P available energy storage modules into the energy storage system in the kth balance control cycle in the case that Δn>0 and that the energy storage system is in a charging state, or puttingΔn energy storage modules with a maximum third state parameter among the P available energy storage modules into the energy storage system in the kth balance control cycle when the energy storage system is in a discharging state.

12. The control method according to claim 11, further comprising:

acquiring a sequencing of third state parameters of the P available energy storage modules from smallest to largest;
wherein the putting the Δn energy storage modules with the minimum third state parameter among the P available energy storage modules into the energy storage system in the kth balance control cycle in the case that Δn>0 and that the energy storage system is in a charging state, or putting the Δn energy storage modules with the maximum third state parameter among the P available energy storage modules into the energy storage system in the kth balance control cycle when the energy storage system is in a discharging state comprises:
putting top Δn energy storage modules among the P available energy storage modules into the energy storage system in the kth balance control cycle in the case that Δn>0 and that the energy storage system is in a charging state, or putting bottom Δn energy storage modules among the P available energy storage modules into the energy storage system in the kth balance control cycle in the case that Δn>0 and that the energy storage system is in a discharging state.

13. The control method according to claim 8, wherein the conducting balance control on the energy storage system in the kth balance control cycle according to the difference value Δn between the number of the energy storage modules to be put into the energy storage system comprises:
splittingΔn energy storage modules, among Q available energy storage modules having been put into the energy storage system in the (k-1)th balance control cycle, from the energy storage system in the kth balance control cycle in the case that Δn<0, Q being a positive integer.

14. The control method according to claims 13, wherein the splitting the Δn energy storage modules, among the Q available energy storage modules having been put into the energy storage system in the (k-1)th balance control cycle, from the energy storage system in the kth balance control cycle in the case that Δn<0 comprises:
splittingΔn energy storage modules with a maximum third state parameter among the Q available energy storage modules from the energy storage system in the kth balance control cycle in the case that Δn<0 and that the energy storage system is in a charging state, or splitting Δn energy storage modules with a minimum third state parameter among the Q available energy storage modules from the energy storage system in the kth balance control cycle when the energy storage system is in a discharging state.

15. The control method according to claim 14, further comprising:

acquiring a sequencing of third state parameters of the Q available energy storage modules from smallest to largest;
wherein the splitting the Δn energy storage modules with the maximum third state parameter among the Q available energy storage modules from the energy storage system in the kth balance control cycle in the case that Δn<0 and that the energy storage system is in a charging state, or splitting the Δn energy storage modules with the minimum third state parameter among the Q available energy storage modules from the energy storage system in the kth balance control cycle when the energy storage system is in a discharging state comprises:

splitting bottom $\Delta n$ energy storage modules among the Q available energy storage modules from the energy storage system in the kth balance control cycle in the case that $\Delta n < 0$ and the energy storage system is in a charging state, or splitting top $\Delta n$ energy storage modules among the Q available energy storage modules from the energy storage system in the kth balance control cycle in the case that $\Delta n < 0$ and that the energy storage system is in a discharging state.

16. The control method according to any one of claims 1 to 15, wherein the first energy storage module is an energy storage module with a maximum first state parameter among the N available energy storage modules, and the second energy storage module is an energy storage module with a minimum first state parameter among the N available energy storage modules.

17. The control method according to any one of claims 1 to 16, wherein each of the state parameters is related to at least one kind of information among the following information: a state of charge, a state of power, and a state of health.

18. The control method according to claim 17, wherein the state of power is related to a temperature and the state of charge.

19. A control device of an energy storage system, wherein the energy storage system comprises a plurality of energy storage modules connected in series, and the control device comprises:

an acquisition unit configured to acquire a difference value between a first state parameter of a first energy storage module and a first state parameter of a second energy storage module among N available energy storage modules in the energy storage system, N being a positive integer; and
a control unit configured to conduct balance control on the energy storage system according to the difference value between the first state parameters.

20. The control device according to claim 19, wherein the control unit is specifically configured to:

divide the N available energy storage modules into M energy storage module groups in the case that the difference value between the first state parameters is greater than a first threshold, M being a positive integer; and
conduct balance control on the energy storage system according to a second state parameter of each energy storage module group among the M energy storage module groups.

21. The control device according to claim 20, wherein the control unit comprises:

a determination subunit configured to determine a number $n_i$ of the energy storage modules to be put into the energy storage system in an ith energy storage module group according to the second state parameter of the ith energy storage module group among the M energy storage module groups, wherein i is a positive integer, and $1 \leq i \leq M$; and
a control subunit configured to put $n_i$ energy storage modules in the ith energy storage module group into the energy storage system.

22. The control device according to claim 21, wherein the determination subunit is specifically configured to:

according to a sum $A_i$ of second state parameters of all the energy storage modules in the ith energy storage module group, a sum A of second state parameters of the N available energy storage modules and a total number n of the energy storage modules to be put into the energy storage system, determine the number $n_i$ of the energy storage modules to be put into the energy storage system in the ith energy storage module group, n being a positive integer less than or equal to N.

23. The control device according to claim 22, wherein the determination subunit is specifically configured to:

determine the number $n_i$ of the energy storage modules to be put into the energy storage system in the ith energy storage module group according to a formula below:

$$n_i = n * A_i / A.$$

24. The control device according to any one of claims 21 to 23, wherein the control subunit is specifically configured to:

put the $n_i$ energy storage modules with a minimum second state parameter in the ith energy storage module group into the energy storage system when the energy storage system is in a charging state, or put the $n_i$ energy storage modules with a maximum second state parameter in the ith energy storage module group into the energy storage system when the energy storage system is in a discharging state.

25. The control device according to claim 24, wherein the acquisition unit is also configured to:

   acquire a sequencing of second state parameters of all the energy storage modules in the ith energy storage module group from smallest to largest;
   the control subunit is specifically configured to:
   put top $n_i$ energy storage modules in the ith energy storage module group into the energy storage system when the energy storage system is in a charging state, or put bottom $n_i$ energy storage modules in the ith energy storage module group into the energy storage system when the energy storage system is in a discharging state.

26. The control device according to claim 19, wherein the control unit comprises:
   a determination subunit configured to determine a difference value $\Delta n$ between the number of energy storage modules to be put into the energy storage system in a kth balance control cycle and the number of energy storage modules to be put into the energy storage system in a (k-1)th balance control cycle in the case that a difference value between the first state parameters acquired in the kth balance control cycle is less than or equal to a first threshold according to a formula below:

   $\Delta n=n(k)-n(k-1)$, wherein $n(k)$ is the number of the energy storage modules to be put into the energy storage system in the kth balance control cycle on the energy storage system, $n(k-1)$ is the number of the energy storage modules to be put into the energy storage system in the (k-1)th balance control cycle, and k is a positive integer greater than 1; and
   a control subunit configured to conduct balance control on the energy storage system in the kth balance control cycle according to the difference value $\Delta n$ between the number of the energy storage modules to be put into the energy storage system.

27. The control device according to claim 26, wherein the control subunit is specifically configured to:
   control a state of the N available energy storage modules to be in accord with a state of the N available energy storage modules in the (k-1)th balance control cycle in the kth balance control cycle in the case that $\Delta n=0$.

28. The control device according to claim 26, wherein the control subunit is specifically configured to:
   put $\Delta n$ energy storage modules, among P available energy storage modules having been split in the (k-1)th balance control cycle, into the energy storage system in the kth balance control cycle in the case that $\Delta n>0$, P being a positive integer.

29. The control device according to claim 28, wherein the control subunit is specifically configured to:
   put $\Delta n$ energy storage modules with a minimum third state parameter among the P available energy storage modules into the energy storage system in the kth balance control cycle in the case that $\Delta n>0$ and that the energy storage system is in a charging state, or put $\Delta n$ energy storage modules with a maximum third state parameter among the P available energy storage modules into the energy storage system in the kth balance control cycle when the energy storage system is in a discharging state.

30. The control device according to claim 29, wherein the acquisition unit is also configured to:

   acquire a sequencing of third state parameters of the P available energy storage modules from smallest to largest;
   the control subunit is specifically configured to:
   put top $\Delta n$ energy storage modules among the P available energy storage modules into the energy storage system in the kth balance control cycle in the case that $\Delta n>0$ and that the energy storage system is in a charging state, or put bottom $\Delta n$ energy storage modules among the P available energy storage modules into the energy storage system in the kth balance control cycle in the case that $\Delta n>0$ and that the energy storage system is in a discharging state.

31. The control device according to claim 26, wherein the control subunit is specifically configured to:
   split $\Delta n$ energy storage modules, among Q available energy storage modules having been put into the energy storage system in the (k-1)th balance control cycle, from the energy storage system in the kth balance control cycle in the case that $\Delta n<0$, Q being a positive integer.

32. The control device according to claim 31, wherein the control subunit is specifically configured to:
   split $\Delta n$ energy storage modules with a maximum third state parameter among the Q available energy storage modules from the energy storage system in the kth balance control cycle in the case that $\Delta n<0$ and that the energy storage system is in a charging state, or split $\Delta n$ energy storage modules with a minimum third state parameter among the Q available energy storage modules from the energy storage system in the kth balance control cycle when the energy storage system is in a discharging state.

33. The control device according to claim 32, wherein the acquisition unit is also configured to:

acquire a sequencing of third state parameters of the Q available energy storage modules from smallest to largest;

the control subunit is specifically configured to: split bottom $\Delta n$ energy storage modules among the Q available energy storage modules from the energy storage system in the kth balance control cycle in the case that $\Delta n<0$ and that the energy storage system is in a charging state, or split top $\Delta n$ energy storage modules among the Q available energy storage modules from the energy storage system in the kth balance control cycle in the case that $\Delta n<0$ and that the energy storage system is in a discharging state.

34. The control device according to any one of claims 19 to 33, wherein the first energy storage module is an energy storage module with a maximum first state parameter among the N available energy storage modules, and the second energy storage module is an energy storage module with a minimum first state parameter among the N available energy storage modules.

35. The control device according to any one of claims 19 to 34, wherein each of the state parameters is related to at least one kind of information among the following information: a state of charge, a state of power and a state of health.

36. The control device according to claim 35, wherein the state of power is related to a temperature and the state of charge.

37. An energy storage system, comprising a plurality of energy storage modules connected in series and the control device according to any one of claims 19 to 36, wherein the control device is configured to conduct balance control on the plurality of energy storage modules.

38. The energy storage system according to claim 37, being a high-voltage direct-current direct-mounted energy storage system.

39. A control device of an energy storage system, wherein the energy storage system comprises a plurality of energy storage modules connected in series, the control device comprises a memory and a processor, the memory is configured to store instructions, and the processor is configured to read the instructions and perform the method according to any one of claims 1 to 18 according to the instructions.

40. A chip, comprising a processor configured to call a computer program from a memory and run the computer program to enable a device provided with the chip to perform the method according to any one of claims 1 to 18.

41. A computer program, which enables a computer to perform the method according to any one of claims 1 to 18.

42. A computer-readable storage medium, used for storing a computer program which enables a computer to perform the method according to any one of claims 1 to 18.

43. A computer program product, comprising a computer program instruction which enables a computer to perform the method according to any one of claims 1 to 18.

FIG. 1

110

111

112

FIG. 2a

110

111

112

FIG. 2b

400

| Acquiring a difference value between a first state parameter of a first energy storage module and a first state parameter of a second energy storage module among N available energy storage modules in the energy storage system, N being a positive integer greater than 1 | S410 |
| Conducting balance control on the energy storage system according to the difference value of the first state parameters | S420 |

FIG. 3

S420

Dividing N available energy storage modules into M energy storage module groups in the case that the difference value of the first state parameters is greater than a first threshold, M being a positive integer — S510

Conducting balance control on the energy storage system according to a second state parameter of each energy storage module group among the M energy storage module groups — S520

FIG. 4

S520

Determining a number $n_i$ of the energy storage modules to be put into the energy storage system in the ith energy storage module group according to a second state parameter of the ith energy storage module group among the M energy storage module groups, i being a positive integer, and $1 \leq i \leq M$ — S610

Putting n energy storage modules in the ith energy storage module group into the energy storage system — S620

FIG. 5

S420

In the case that a difference value of the first state parameters acquired in the kth balance control cycle is less than or equal to the first threshold, determining a difference value $\Delta n$ of the number of the energy storage modules to be put into the energy storage system between a kth balance control cycle and a k1th balance control cycle according to a formula below:
$$\Delta n = n(k) - n(k-1);$$
— S710

Conducting balance control on the energy storage system in the kth balance control cycle according to the difference value $\Delta n$ of the number of the energy storage modules to be put into the energy storage system. — S720

FIG. 6

800

```
┌─────────┐
│  Start  │
└────┬────┘
     │
┌─────────────────────────────┐
│ S801. Determining a number N │
│ of available energy storage  │
│ modules in the energy storage│
│ system                       │
└────┬────────────────────────┘
     │
┌─────────────────────────────┐
│ S802. Determining the number │
│ N of the available energy    │
│ storage modules in the       │
│ energy storage system        │
└────┬────────────────────────┘
     │
┌─────────────────────────────┐
│ S803. Computing a maximum    │
│ deviation of normalized      │
│ parameters between the N     │
│ available energy storage     │
│ modules                      │
└────┬────────────────────────┘
     │
  S804. Maximum
  deviation<first
  threshold?
```

**Grouping and sequencing balance method S1000**

S1001. Computing a sum total A of normalized parameters of all the N available energy storage modules

S1002. Equally dividing all the available energy storage modules into m groups

S1003. Computing a sum total Ai of normalized parameters of energy storage modules in each available energy storage module group respectively

S1004, $n_i = n * A_i / A$

S1005. Conducting a sequencing on normalized parameters of the energy storage modules in each available energy storage module group from small to large

S1006. Putting the former $n_i$ energy storage modules in each available energy storage module group into the energy storage system in a charging state; putting the latter $n_i$ energy storage modules in each available energy storage module group into the energy storage system in a discharging state

End

**Optimized sequencing balance method S900**

$\Delta n = 0$   S901. Computing $\Delta n$   $\Delta n < 0$

$\Delta n > 0$

S902. Maintaining a put-in state or a split state of N available energy storage modules unchanged

End

S903. Maintaining the available energy storage modules put into the energy storage system in a put-in state

S904. Conducting a sequencing on normalized parameters of all the available energy storage modules split from the energy storage system from small to large

S905. Putting the former $\Delta n$ energy storage modules among all the available energy storage modules split from the energy storage system into the energy storage system in a charging state; putting the latter $\Delta n$ energy storage modules among all the available energy storage modules split from the energy storage system into the energy storage system in a discharging state

End

S906, Maintaining the available energy storage modules split from the energy storage system in a split state

S907. Conducting a sequencing on normalized parameters of all the available energy storage modules put into the energy storage system from small to large

S908. Splitting the latter $\Delta n$ energy storage modules among all the available energy storage modules put into the energy storage system from the energy storage system in a charging state; splitting the former $\Delta n$ energy storage modules among all the available energy storage modules put into the energy storage system from the energy storage system in a discharging state

End

FIG. 7

28

Control device 900

Acquisition unit 910

Control unit 920

FIG. 8

1000

Control device

1020

Memory

Processor

1010

1030

Transceiver

FIG. 9

## INTERNATIONAL SEARCH REPORT

| | International application No. |
|---|---|
| | **PCT/CN2022/098807** |

**A. CLASSIFICATION OF SUBJECT MATTER**

H02J 7/00(2006.01)i; H02J 3/32(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNTXT; CNABS; CNKI; WPABS; DWPI; EPTXT; WOTXT; USTXT: 储能, 控制, 串联, 均衡, 参数, 差值, 荷电状态, 功率状态, 健康状态, storage, control, series, balance, parameter, differential, SOC, SOP, SOH

**C. DOCUMENTS CONSIDERED TO BE RELEVANT**

| Category* | Citation of document, with indication, where appropriate, of the relevant passages | Relevant to claim No. |
|---|---|---|
| X | CN 113991797 A (NANJING NARI-RELAYS ENGINEERING TECHNOLOGY CO., LTD. et al.) 28 January 2022 (2022-01-28) description, paragraphs [0055]-[0100], and figures 1-4 | 1, 16-19, 34-43 |
| A | CN 113991797 A (NANJING NARI-RELAYS ENGINEERING TECHNOLOGY CO., LTD. et al.) 28 January 2022 (2022-01-28) description, paragraphs [0055]-[0100], and figures 1-4 | 2-15, 20-33 |
| X | CN 216720944 U (ZHOU XIWEI) 10 June 2022 (2022-06-10) description, paragraphs [0020]-[0032], and figures 1-3 | 1, 16-19, 34-43 |
| A | CN 216720944 U (ZHOU XIWEI) 10 June 2022 (2022-06-10) description, paragraphs [0020]-[0032], and figures 1-3 | 2-15, 20-33 |
| X | WO 2014181081 A1 (ASTON UNIVERSITY) 13 November 2014 (2014-11-13) description, page 23, line 20-page 33, line 15, and figures 1-4 | 1, 16-19, 34-43 |
| A | WO 2014181081 A1 (ASTON UNIVERSITY) 13 November 2014 (2014-11-13) description, page 23, line 20-page 33, line 15, and figures 1-4 | 2-15, 20-33 |
| A | CN 114400694 A (GUOCHUANG RENEWABLE ENERGY TECHNOLOGY CO., LTD.) 26 April 2022 (2022-04-26) entire document | 1-43 |

☑ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 December 2022** | **18 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2022/098807** |

**C.** **DOCUMENTS CONSIDERED TO BE RELEVANT**

| Category* | Citation of document, with indication, where appropriate, of the relevant passages | Relevant to claim No. |
|---|---|---|
| A | CN 113612264 A (LIN WEIXING) 05 November 2021 (2021-11-05)<br>entire document | 1-43 |

Form PCT/ISA/210 (second sheet) (January 2015)

**INTERNATIONAL SEARCH REPORT**
Information on patent family members

| International application No. |
| --- |
| **PCT/CN2022/098807** |

| Patent document cited in search report | | | Publication date (day/month/year) | Patent family member(s) | Publication date (day/month/year) |
| --- | --- | --- | --- | --- | --- |
| CN | 113991797 | A | 28 January 2022 | None | |
| CN | 216720944 | U | 10 June 2022 | None | |
| WO | 2014181081 | A1 | 13 November 2014 | None | |
| CN | 114400694 | A | 26 April 2022 | None | |
| CN | 113612264 | A | 05 November 2021 | None | |

Form PCT/ISA/210 (patent family annex) (January 2015)